# EUROPEAN PATENT SPECIFICATION

(11) **EP 1 023 027 B1**
(45) Date of publication and mention of the grant of the patent: **16.08.2006**
(21) Application number: 98953309.6
(22) Date of filing: 08.10.1998
(51) Int. Cl.: A61G 5/06, A61G 5/04

(54) **SAFETY SEPARATION SYSTEM**
SICHERHEITSTRENNUNGSVORRICHTUNG
SYSTEME DE SEPARATION DE SECURITE

(30) Priority: 14.10.1997 US 61974 P
(43) Date of publication of application: 02.08.2000
(73) Proprietor: DEKA PRODUCTS LIMITED PARTNERSHIP, Manchester, NH 03101 (US)
(72) Inventor: KAMEN, Dean, L., Bedford, NH 03110 (US); AMBROGI, Robert, Manchester, NH 03104 (US); MORRELL, John, B., Manchester, NH 03104 (US); LANGENFELD, Christopher, C., Nashua, NH 03063 (US); SMITH, Stanley, B., III, Raymond, New Hampshire 03077 (US); STEENSON, James, H., Jr., Derry, NH 03038 (US)
(74) Representative: Greene, Simon Kenneth
(86) International application number: PCT/US1998/021200
(87) International publication number: WO 1999/018907

(56) References cited:
- EP-A- 0 436 103
- US-A- 3 710 682
- US-A- 5 701 965
- US-A- 5 730 236

## Description

### Technical Field

The present invention pertains to a vehicle including a safety system and method for preventing injury to the passenger of said motorized vehicle by separating a body support from the ground contacting assembly of the vehicle.

### Background of the Invention

Vehicles, whether for the transportation of humans or other types of payloads, may lack stability, either by design or due to the nature of their use. Many such vehicles are particularly susceptible to tipping, whether due to collision, mechanical failure, sudden turns, steep inclines, or an encounter with a surface irregularity for which the mechanism is incapable of compensating. Indeed, any personal vehicle may tip when sufficiently severe surface irregularities are encountered. Under these circumstances, the occupant or contents of the vehicle must be protected so that injury does not result from propulsion of the occupant toward the ground or other solid obstacle. Unless protected, the occupant may also sustain injury due to trauma or crushing if the vehicle, which is relatively massive, overturns or is propelled, due to its inertia, into a solid obstacle or on top of the occupant.

Methods are known for absorbing or diverting kinetic energy inherent in the motion of a vehicle to insure that it is not converted to propulsion of the occupant of the vehicle into a solid body such as the ground. Common examples are bumpers on cars, which absorb kinetic energy in crumpling metal, and airbags, which couple the mechanical energy of car passengers into the compression and redistribution of gas in a bag before enough time has elapsed for the bodies of the passengers to hit the steering wheel or windshield of the car with resulting serious injury.

Other means are known to employ the kinetic energy present in a massive subcomponent of the vehicle, to inflate a bellows or other cushion to protect the vehicle occupants in the case of a head-on collision.

In an unenclosed vehicle such as a wheelchair, for example, it is often safer to divert the passenger from the path of the center of mass of the vehicle than to trap him between the mass of the vehicle, moving with its attendant momentum, and its ultimate position of repose, such as at a solid surface after a crash.

EP 436103 describes an electronic control system for a stair climbing vehicle, in which a user seat is controlled to keep the user approximately vertical even as the vehicle climbs stairs, the stair climbing vehicle comprising a body support, a ground contacting assembly and a connector coupling the body support and the ground contacting member.

In accordance with the invention, there is provided a vehicle with a safety mechanism for protecting a passenger of said vehicle in a situation wherein the vehicle undergoes undesirable acceleration according to claim 1. The vehicle is one which has a ground contacting assembly and a body support with a center of gravity (CG). The safety mechanism has a connector for coupling the body support and the ground contacting assembly. It also has a release for decoupling the motion of the CG of the body support along at least one axis from the motion of the ground contacting assembly. An actuator for unleashing the release in response to an undesired acceleration of the vehicle is also provided.

In accordance with the invention, the connector allows free motion of the body support with respect to the ground contacting assembly, and may be a pneumatic cylinder or a slide track. The safety mechanism may also have a rotary actuator, including a motor, for rotating the body support with respect to the ground contacting assembly such as to counteract the effect of a roll of the ground contacting assembly on the orientation of the body support with respect to a vertical direction.

In another embodiment of the invention, the safety mechanism has a pilot wheel assembly coupled to the body support. The pilot wheel assembly may include at least one wheel, and a self-leveling mechanism. The release may include a means for storing mechanical energy, such as a spring or coil spring, coupled to at least one of the ground contacting assembly and the body support such that the mechanical energy is used to decouple the motion of the CG of the body support from the motion of the ground contacting assembly.

In accordance with further embodiments of the invention, the safety mechanism may have a reservoir of mechanical energy coupled to at least one of the ground contacting assembly and the body support such that the mechanical energy is used to decouple the motion of the CG of the body support from the motion of the ground contacting assembly.

In accordance with another aspect of the invention, a method is provided for protecting a passenger of a vehicle having a ground contacting assembly and a body support in a situation wherein the vehicle undergoes undesirable acceleration. The method has the steps of sensing the undesired acceleration and decoupling the motion of the center of gravity of the body support from the motion of the ground contacting assembly with respect to at least one axis.

### Brief Description of the Drawings

The invention will be more readily understood by reference to the following description, taken with the accompanying drawings, in which:
FIG. 1 is a side view of a prior art wheelchair-type vehicle of the type in which an embodiment of the invention may be advantageously employed.
FIG. 2 is a side view of the wheelchair-type vehicle of FIG. 1 shown in an early stage of a forward tip.
FIG. 3A is a side view of the wheelchair-type vehicle tipping as in FIG. 2 employing an embodiment of the current invention showing partial separation of the body support forward of the ground contacting assembly.
FIG. 3B is a perspective view from the side of a wheelchair-type vehicle employing an alternate embodiment of the current invention showing partial separation of the body support from the ground contacting assembly along a slide track.
FIG**.** 4 is a side view of the wheelchair-type vehicle tipping as in FIG. 2 employing an embodiment of the current invention showing a further stage of separation of the body support forward of the ground contacting assembly.
FIG**.** 5 is a side view of the wheelchair-type vehicle tipping as in FIG. 2 employing an embodiment of the current invention showing a final stage of separation of the body support forward of the ground contacting assembly.

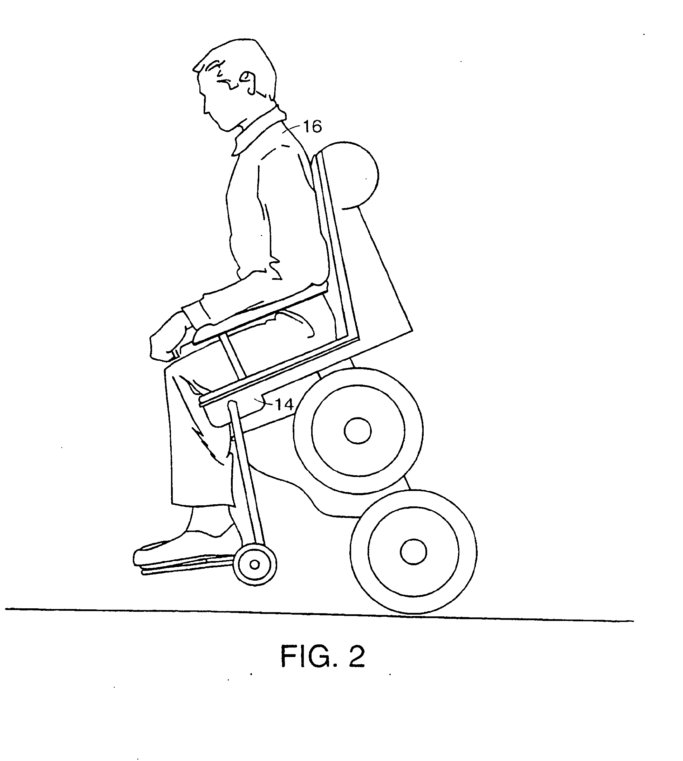

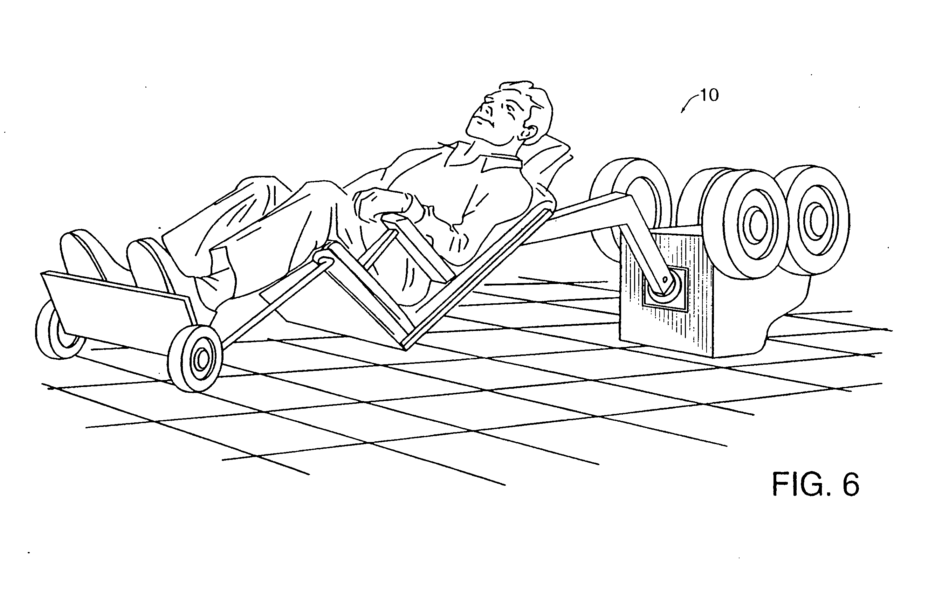

FIG. 6 is a perspective view of the wheelchair-type vehicle tipping as in FIG. 2 employing an embodiment of the current invention showing a final stage of separation of the body support forward of the ground contacting assembly.

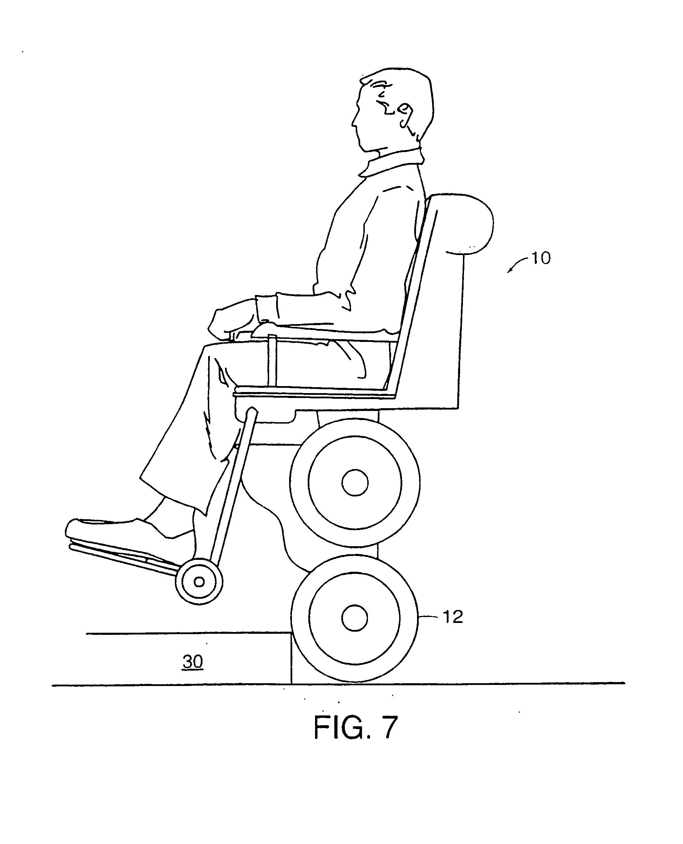

FIG. 7 is a side view of the wheelchair-type vehicle of FIG. I shown at an instant at which a ground obstacle is encountered.

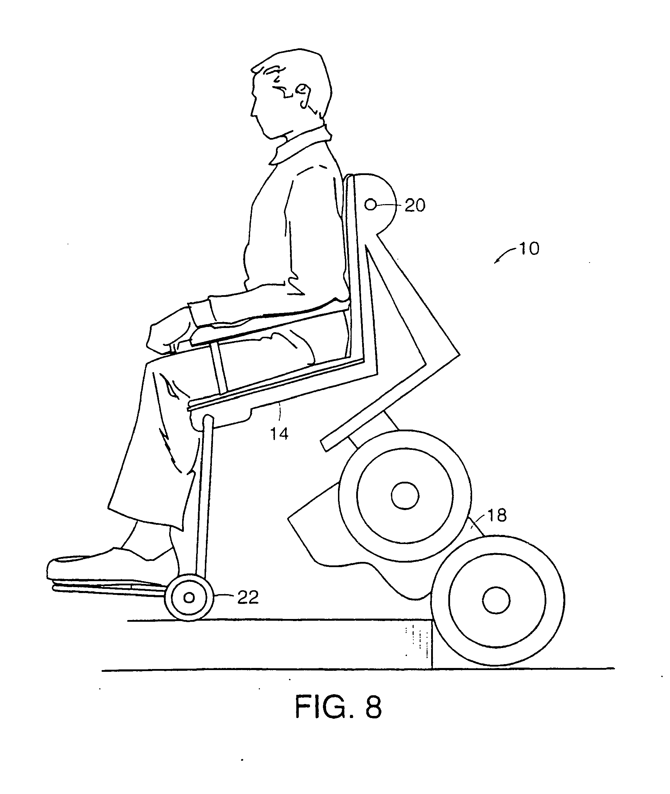

FIG. 8 is a side view of the wheelchair-type vehicle tipping as in FIG. 7 employing an embodiment of the current invention showing partial separation of the body support forward of the ground contacting assembly.

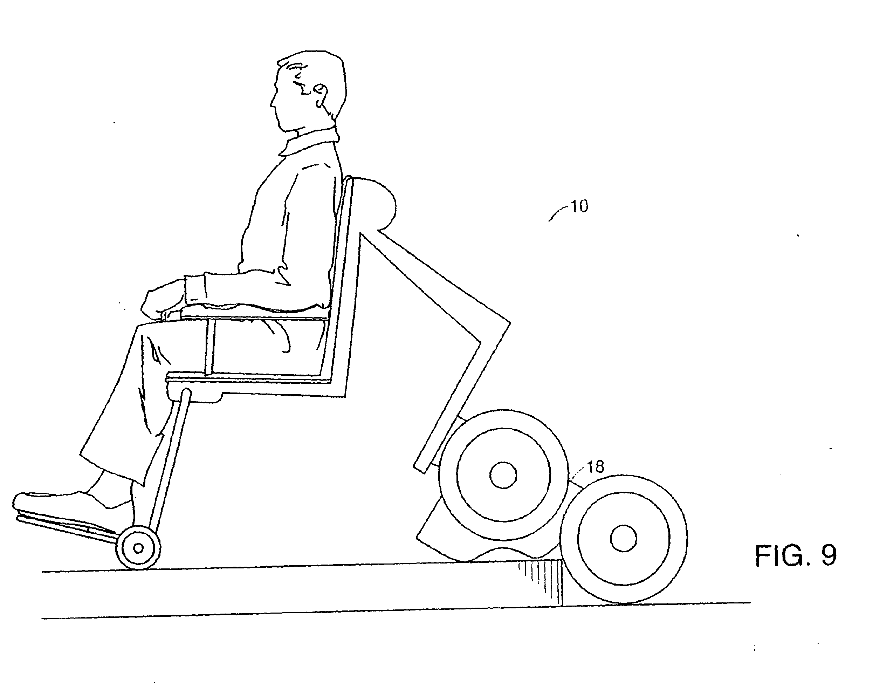

FIG. 9 is a side view of the wheelchair-type vehicle tipping as in FIG. 7 employing an embodiment of the current invention showing a further stage of separation of the body support forward of the ground contacting assembly.

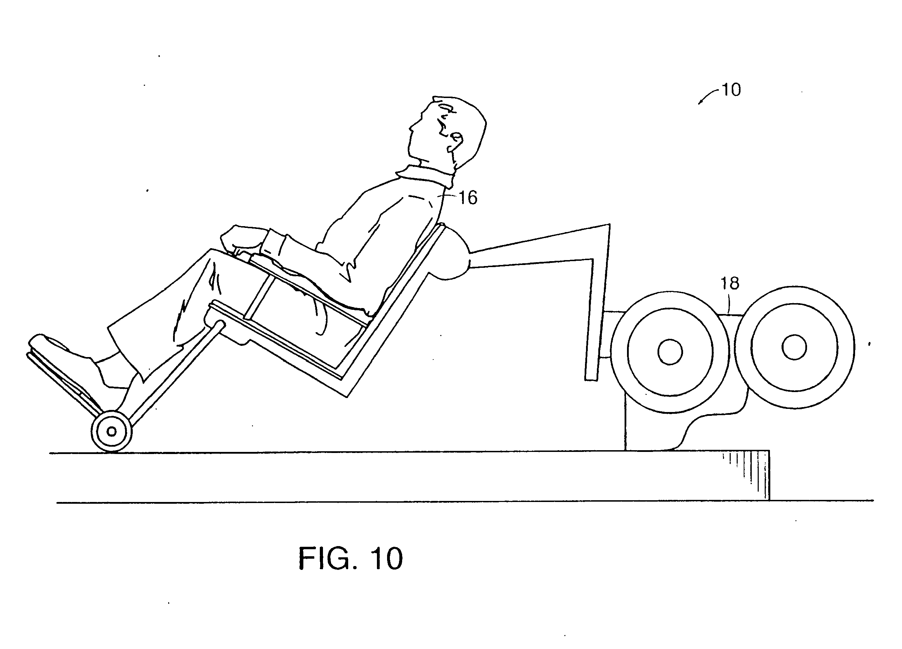

FIG. 10 is a side view of the wheelchair-type vehicle tipping as in FIG. 7 employing an embodiment of the current invention showing a final stage of separation of the body support forward of the ground contacting assembly.

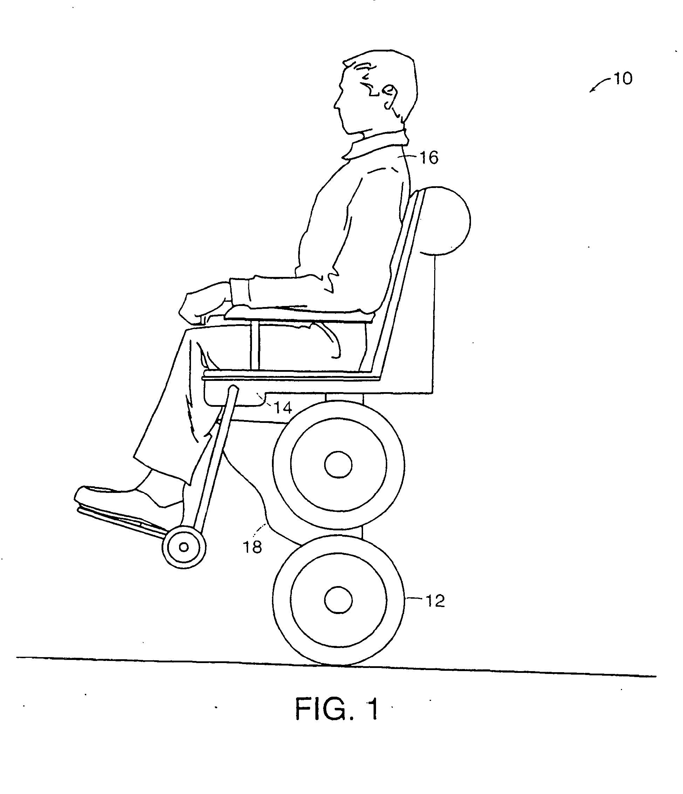

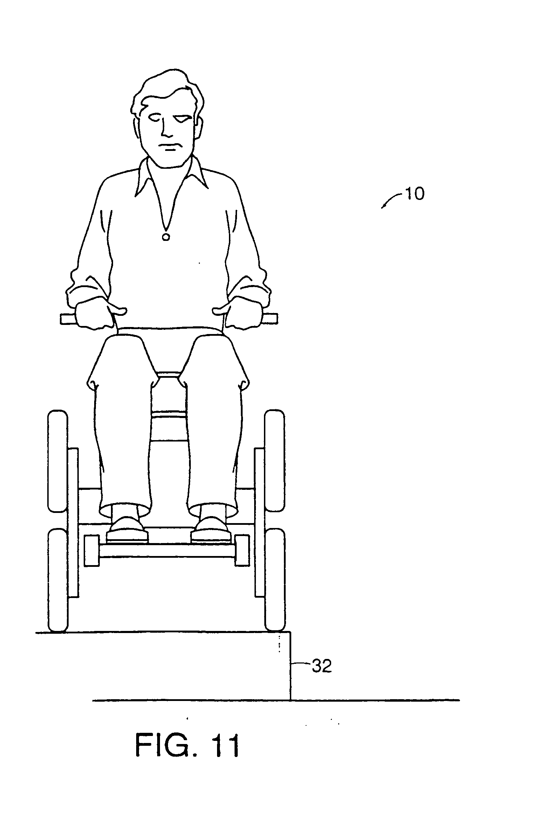

FIG. 11 is a front view of the vehicle of FIG. 1, shown approaching a step or curb.

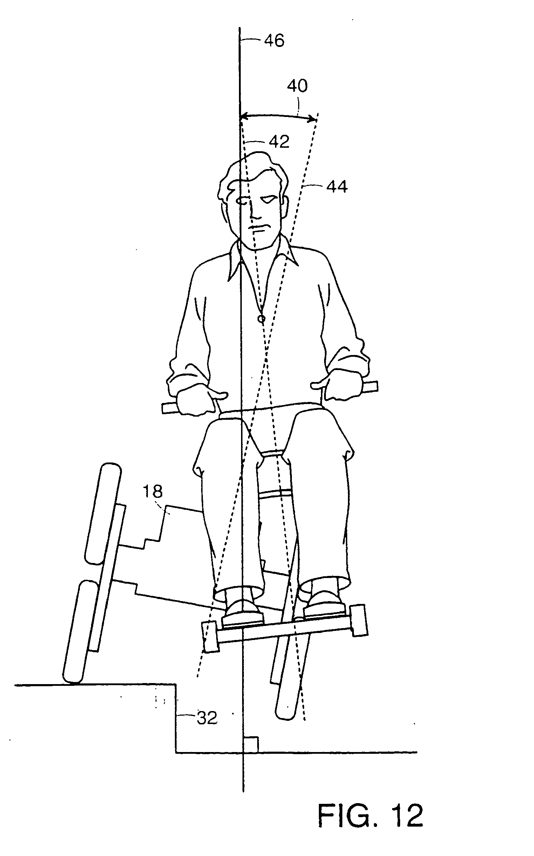

FIG. 12 is a front view of the wheelchair-type vehicle tipping as in FIG. 11 employing an embodiment of the current invention showing partial separation of the body support sideward of the ground contacting assembly.

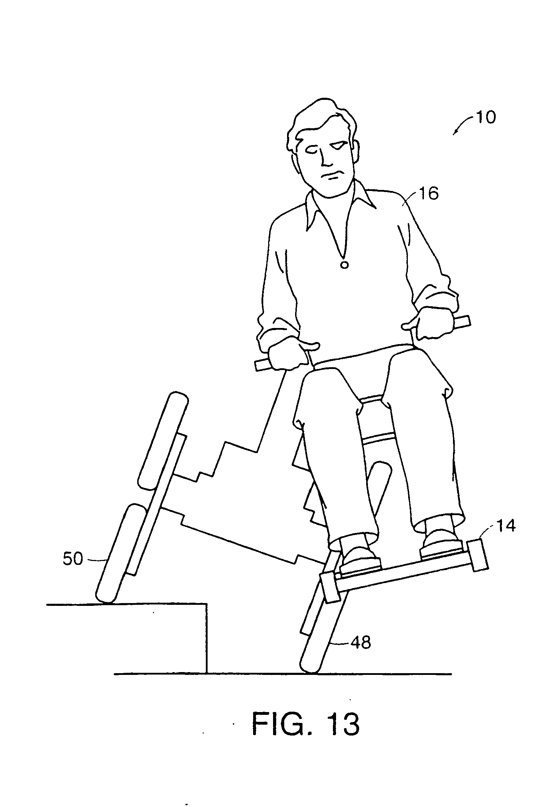

FIG. 13 is a front view of the wheelchair-type vehicle tipping as in FIG.11 employing an embodiment of the current invention showing a further stage of separation of the body support sideward of the ground contacting assembly.

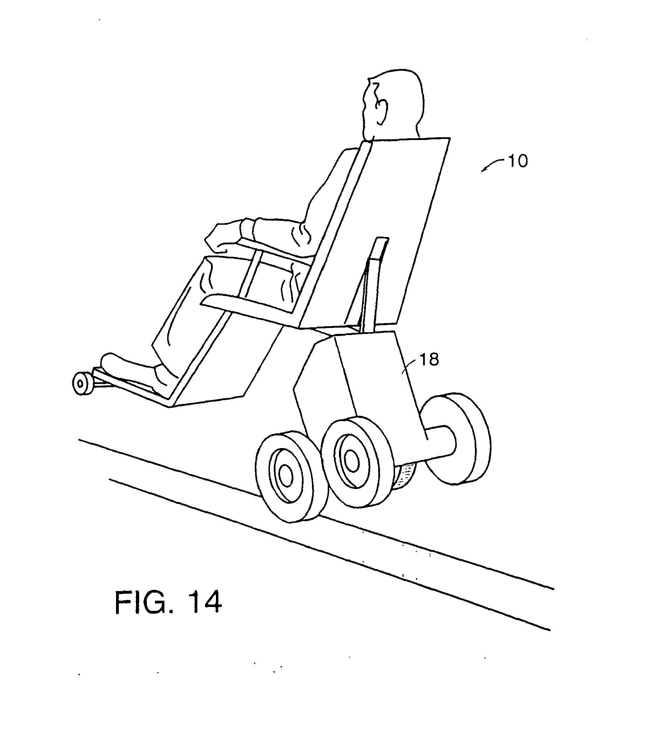

FIG. 14 is a perspective view of the wheelchair-type vehicle employing an embodiment of the current invention in the intermediate stage of a sideward tip of FIG. 13.

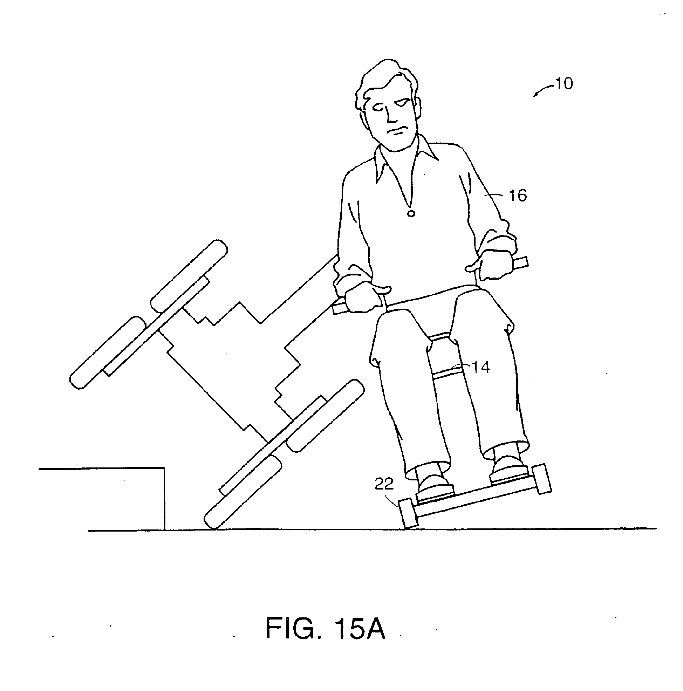

FIG. 15A is a front view of the wheelchair-type vehicle tipping as in FIG. 11 employing an embodiment of the current invention showing ground contact of a pilot wheel.

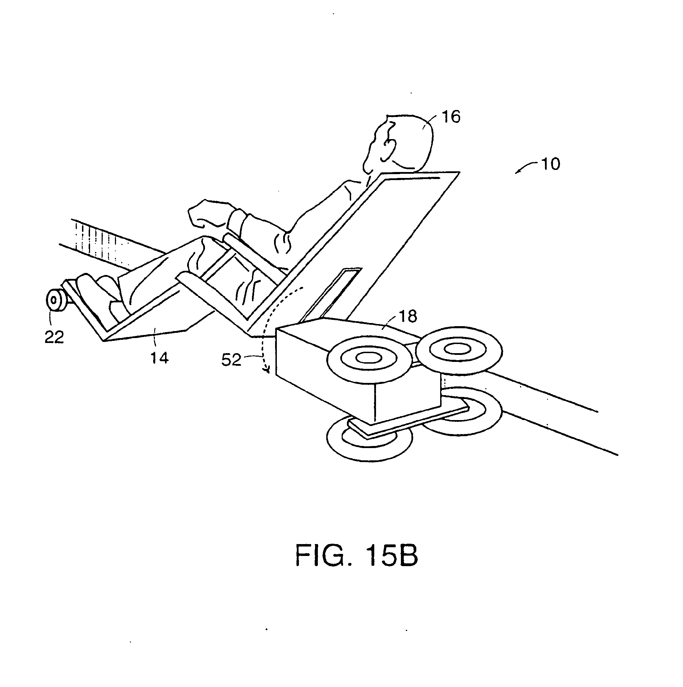

FIG. 15B is a perspective view of the wheelchair-type vehicle employing an embodiment of the current invention in the stage of a sideward tip of FIG. 15.

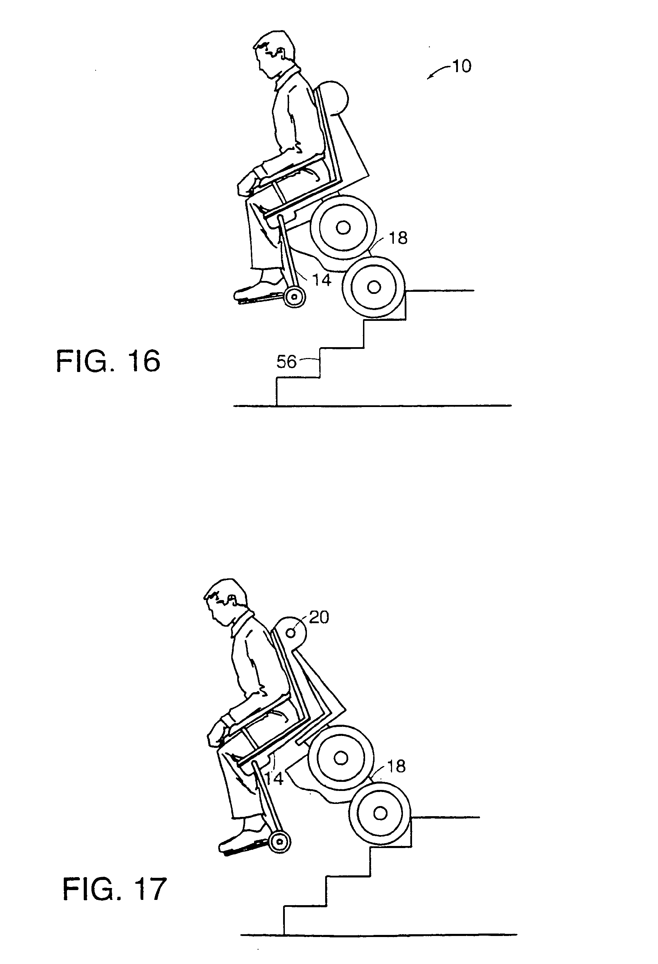

FIG. 16 is a side view of the wheclchair-type vehicle of FIG. I shown in an early stage of a forward fall down a flight of stairs.
FIG. 17 is a side view of the wheelchair-type vehicle tipping as in FIG. 16 employing an embodiment of the current invention showing partial separation of the body support forward of the ground contacting assembly.

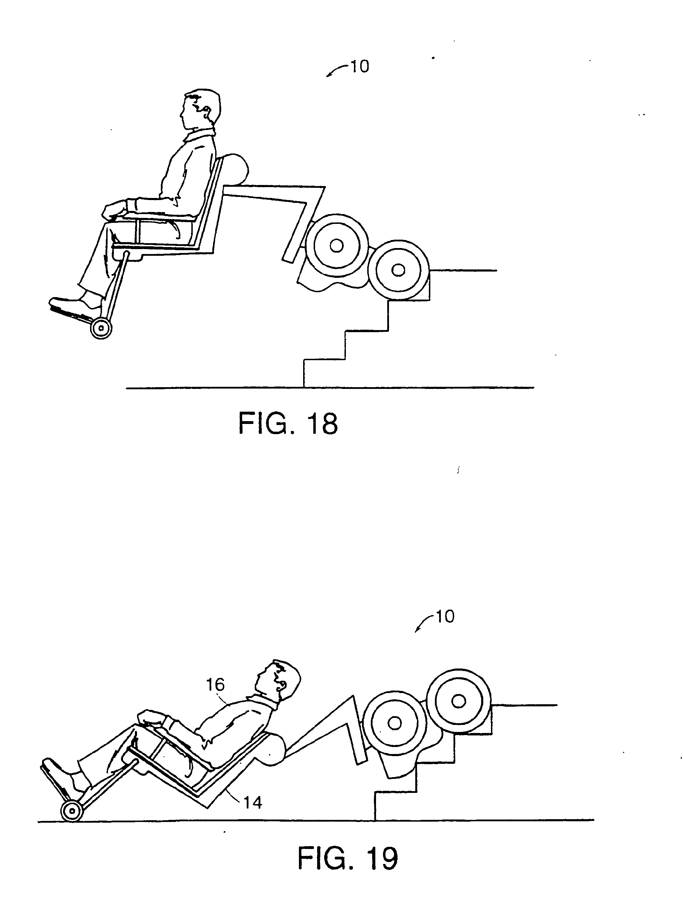

FIG. 18 is a side view of the wheelchair-type vehicle tipping as in FIG. 16 employing an embodiment of the current invention showing a further stage of separation of the body support forward of the ground contacting assembly.
FIG. 19 is a side view of the wheelchair-type vehicle tipping as in FIG. 16 employing an embodiment of the current invention showing a final stage of separation of the body support forward of the ground contacting assembly.

### Detailed Description of Preferred Embodiments

The present invention provides a mechanical strategy for handling the fall in any direction of a personal vehicle, such as a wheelchair-type vehicle.

Referring now to FIGS. 1 through 19, wherein like elements are designated by identical numerals, views are shown of a personal vehicle, designated generally by numeral **10,** in progressive stages of various tipping motions. An example of such a vehicle is the wheelchair-type vehicle described in copending U.S. patent application, Serial No. 08/250,693, filed May 27, 1994 for an invention by Kamen et al., which is herein incorporated by reference. The present invention is applicable to motorized personal or other vehicles, such as the vehicle described in the application of Kamen, and to unmotorized personal vehicles as well. Referring, particularly, to FIG. 1, vehicle **10** is shown, by way of example, as supported on a pair of laterally disposed wheels **12** (of which one is visible in FIG. 1) that provide ground contact for vehicle **10**. While the invention will be described with reference to the wheelchair-type vehicle shown in FIG. 1, it is to be understood that vehicles with other configurations, bearing other numbers of wheels, and used for other purposes may similarly benefit from the safety mechanism which is the subject of the present invention.

Vehicle **10,** broadly speaking, has two primary functional parts: a body support **14** which may be in the form of a seat or otherwise, for carrying a passenger **16**, and a ground contacting assembly **18** which includes wheels **12** and bearing mechanisms and motor drives (not shown), if present, associated with the wheels. In conventional vehicles, and under ordinary circumstances of operation, body support **14** is coupled to ground contacting assembly **18** in a fixed manner, and passenger **16** is transported through locomotion across the ground of ground contacting assembly **18.** The strategy employed by the present invention in case of mishap is to decouple passenger **16,** along with body support **14,** from being constrained to follow the motion defined by coupling of body support **14** to ground contacting assembly **18.** Prior to a mishap, which may include an encounter with an obstacle, sudden turning resulting in instability, mechanical or electrical failure, or other event, passenger **16** is traveling with motion parallel to the ground, and in a desired body orientation, ordinarily seated. To avoid injury to the passenger, it is desirable to maintain this orientation, to the extent possible, independent of subsequent tumbling of the ground contacting assembly **18.** In order to bring about the desired separation of the post-mishap inertial motion of the body support **14** from that of the ground contacting assembly, a physical decoupling of the body support from the ground contacting assembly is effected with respect to some or all degrees of freedom. The separation is 'passive' in the sense that the kinetic energy of the body support and passenger are used to effect the decoupling, or, alternatively, the separation may be powered or assisted by mechanical or other means. Examples of some methods of decoupling are discussed in the description which follows.

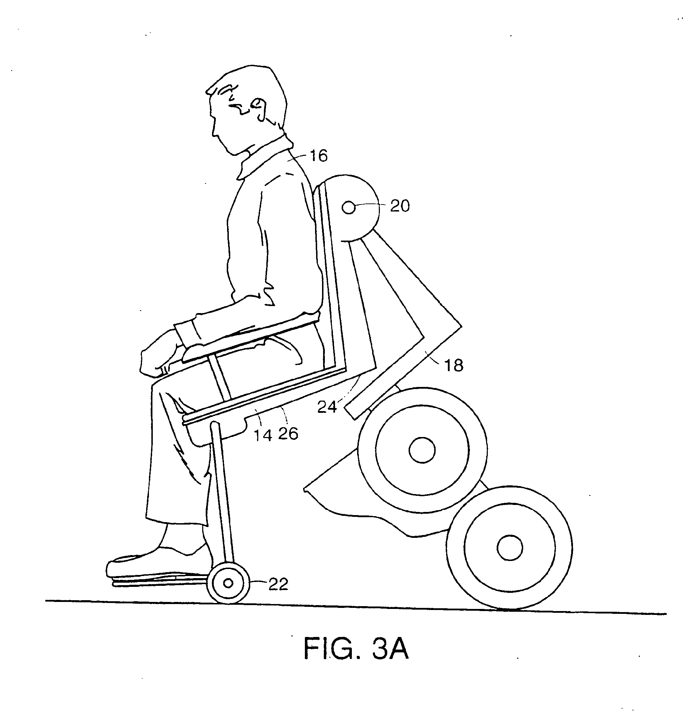

Referring now to FIG. 2, a side view is shown of vehicle **10** in the initial stages of a tip, shown, in this case and by way of example, in a forward direction. Body support **14** is shown, again by way of example, as a chair-type configuration in which occupant **16** is seated, however other modalities of support are possible, and occupant **16** might be recumbent or in another position. FIGS. 2-6 represent a time-serics of side views of vehicle **10** as it is tipping. Such a tip might arise due to a sudden turn or a mechanical failure of the system which ordinarily maintains vehicle **10** in an upright position, or due to an encounter with a surface irregularity or obstacle for which the vehicle and/or the driver is incapable of compensating. One of the embodiments of the present invention is shown in FIG. 3A, where vehicle **10** is shown in a further stage of a forward tip. In the depicted embodiment, body support **14** is coupled to ground contacting assembly via connector **20,** which is shown, by way of example, as a pivot, located such that the inertial motion of body support **14** in a forward direction causes the body support and passenger **16** to swing clear of ground contacting assembly **18** after a mishap. A spring, such as a coil spring configured about pivot **20** may be employed to assist the separation of body support **14** from ground contacting assembly **18.** A "release," as used in this description and in the claims hereto appended, refers to any release mechanism for enabling the separation of body support **14** from ground contacting assembly **18.** Many such mechanisms, such as a latch employing a locking mass displaced from a locking position upon inertial acceleration, are known to persons skilled in the mechanical arts. Additionally, electronic sensors may be used to unleash the release which assists.in the decoupling of the body support **14** from ground contacting assembly **18,** after an initial tip is sensed. In addition to assisting the separation of body support **14** from ground contacting assembly **18,** a spring coupled between body support **14** and ground contacting assembly **18** serves, once expanded, as a damper to absorb the kinetic energy of the body support **14** thereby cushioning the effect of the mishap on passenger **16** and vehicle.

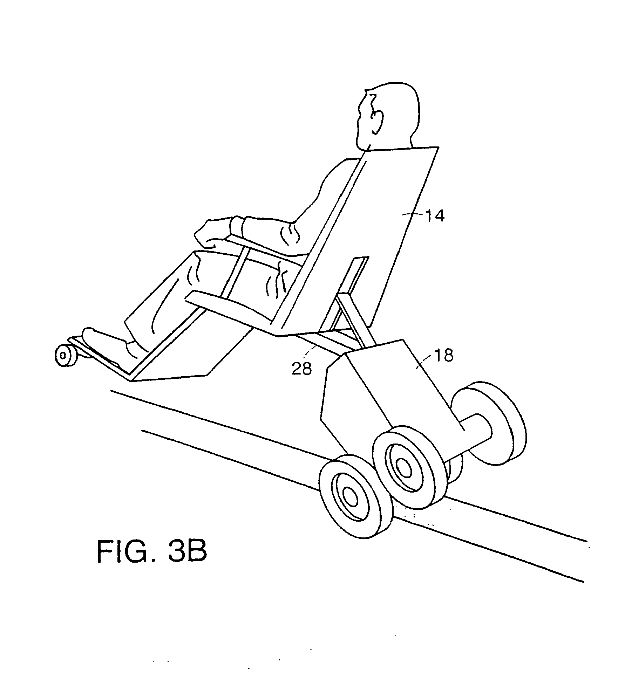

Pivot **20** is shown as an example of many mechanisms whereby body support **14** may be coupled to ground contacting assembly **18** so as to permit subsequent decoupling of motion in the event of mishap. In other embodiments of the invention identical relative motion of body support **14** with respect to ground contacting assembly **18** as that shown in FIG. 3A is achieved by coupling a point **24** on bottom surface **26** of body support **14** to a slide mechanism **28** (shown in FIG. 3B). Such an embodiment is described with reference to FIG. 3B wherein body support **14** separates from ground contacting assembly **18** by riding on slide mechanism **28** which constrains the motion of body support **14** along at least one axis. By virtue of this arrangement, body support **14** can be said to be virtually pivoted about a point above the respective centers of mass of both body support **14** and ground contacting assembly **18.** The slide mechanism constrains body support **14** to move in a forward direction. with reference to the driver, and may be realized by means of a slide, or a rodless pneumatic cylinder, or in other ways, as are known to persons skilled in the mechanical arts.

In an alternate embodiment, the mechanism providing coupling between body support **14** and ground contacting assembly **18** is a universal joint, thereby decoupling the motions of body support **14** and ground contacting assembly **18** after a mishap to operate, as well, when the unintended acceleration of ground contacting assembly **18** is in a sideward direction. Such an arrangement prevents torques from being transmitted from the surroundings to the body support **14.**

Referring, again, to FIG. 3, it is apparent that operation of the mechanism separating the motions of body support **14** and ground contacting assembly **18** after a mishap permits passenger **16** to remain substantially in a proper orientation, with head up and legs down, and avoids entrapment of passenger **16** with ground contacting assembly **18.** In a preferred embodiment of the invention, body support **14** is provided with one or more pilot wheels **22** to allow continued forward motion of body support **14** and to prevent tipping about a fixed point in contact with the ground.

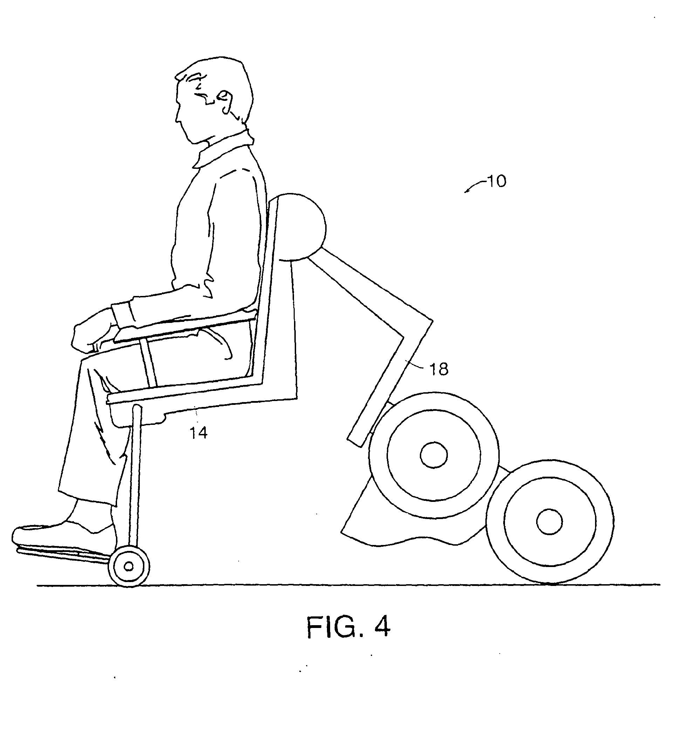

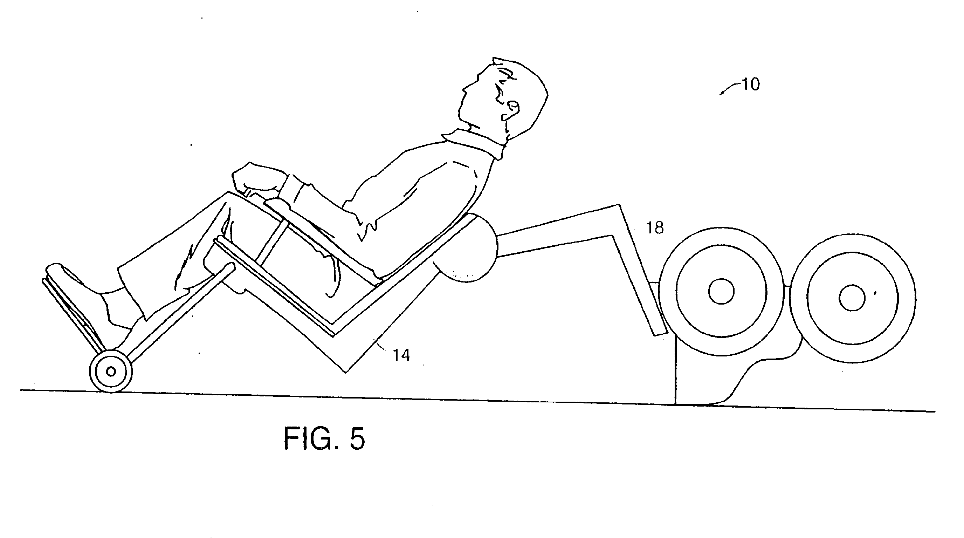

FIG. 4 shows vehicle **10** in a subsequent stage of separation of body support **14** from ground contacting assembly **18,** while FIG. 5 shows vehicle **10** after ground contact assembly **18** has fully overturned, while passenger **16** remains protected by body support **14** and in a substantially upright position. FIG. 6 is a perspective view of vehicle **10** in the same state of repose as depicted from the side in FIG. 5.

Referring now to FIG. 7, vehicle **10** is shown in an upright orientation associated with ordinary locomotion, at an instant at which wheel **12** encounters a ground obstacle **30.** While vehicle might be designed to overcome the obstacle, in the event of the incapacity of the vehicle to overcome the obstacle, the response of an embodiment of the present invention will be described with reference to FIGS. 8-10. Referring, more particularly, to FIG. 8. by way of example, vehicle **10** is shown in an early stage of separation of body support **14** from ground contacting assembly **18** by means of opening about pivot **20**. Pilot wheel **22** is shown having made contact with ground obstacle **30** to provide support against tipping for body support **14.** A later stage of separation of body support **14** from ground contacting assembly **18** is shown in FIG. 9, while FIG. 10 shows ground contacting assembly **18** fully tipped, while passenger **16** remains in a substantially upright and protected position by virtue of the operation of the invention to separate the motion of body support **14** from that of ground contacting assembly **18.**

Referring now to FIGS. 11-15, in which vehicle **10** is shown responding to a sideward tip in accordance with the invention. Referring more particularly to FIG. 11, vehicle **10** is shown approaching a lateral surface irregularity **32** which may be a curb or a step, for example. FIG. 12 shows ground contacting assembly **18** in an early stage of lateral tipping due to surface irregularity **32.** The term roll angle" **40** as used in this description and in the appended claims is defined to refer to the angle between the vertical axis of passenger **16** (i.e., a line parallel to the spine of the passenger) and an axis **44** parallel to a plane containing a wheel **12** of ground contacting assembly **18.** Roll angle **40** may be corrected, in accordance with a preferred embodiment of the invention, by allowing free or mechanically driven rotation of body support **14** about an axis perpendicular to axes **42** and **44.** Equivalently, roll angle **40** may be corrected to maintain passenger **16** in a substantially upright position by other combinations of motion known to persons skilled in the mechanical arts, such as by means of a driven swivel of body assembly **14** about axis **42** parallel to the spine of passenger **16** coupled with translation of the point of contact between body assembly **14** and the plane of ground contacting assembly **18** which is perpendicular to axis **44.** In a preferred embodiment of the invention, the swivel of body assembly **14** about axis **42** is driven by a motor or other actuator (not shown) which is part of a control loop in which the torque applied about axis **42** is governed by a controller on the basis of the sensed deviation of axis **42** from the true vertical axis

FIG**.** 13 shows vehicle **10** in a further stage of lateral tipping, with wheels **48** and **50** in contact with the underlying surface at different vertical levels, and with the position of body support **14** and passenger **16** corrected in accordance with an embodiment of the invention, as described above. FIG. 14 is a perspective view of vehicle **10** in the later tip of ground contacting assembly **18** shown in FIG. 13.

FIG. 15A shows a side view of vehicle **10** in a later stage of a lateral tip, where pilot wheel **22** has contacted the ground to provide support against tipping for body support **14.** FIG. 15B shows a perspective view of vehicle **10** in a final state of repose after the sideward tip of FIG. 15A. While ground contacting assembly **18** has rotated along path **52,** the inertia of body support **14** has maintained passenger **16** in an upright and protected position, and at rest, with pilot wheel **22** supporting body support **14** on the ground. In an alternate embodiment, body support **14** may have a plurality of pilot wheels **22** or casters, with a mechanical, hydraulic, or other interconnecting link to provide for force-leveling or self-leveling so that after a mishap, body support **14** may be supported on a plurality of pilot wheels **22,** even when the ground surface is uneven.

FIGS. 16-19 show vehicle **10** responding to a forward fall down a flight of stairs **56** by separation of body support **14** from ground contacting assembly **18** in accordance with an embodiment of the invention. FIG 16 shows the initial stage of the forward fall, prior to separation of body support **14** from ground contacting assembly **18.** FIG. 17 shows the separation of body support **14** from ground contacting assembly **18** about pivot **20.** while FIG. 18 shows a further stage of separation, and FIG. 19 shows the final state of repose of vehicle **10**, with passenger **16** shown supported by body support **14** in a substantially upright and protected orientation, despite the complete overturn of ground contacting assembly **18**.

## Claims

1. A vehicle including a safety mechanism for protecting a passenger of said vehicle in a situation wherein the vehicle undergoes undesirable acceleration, having a ground contacting assembly (18) and a body support (12), the body support having a center of gravity, the safety mechanism comprising:
a. a connector (20) coupling the body support and the ground contacting assembly;
b. a release actuatable to decouple motion of the center of gravity of the body support along at least one axis from motion of the ground contacting assembly; and
c. an actuator arranged to unleash the release in automatic response to the undesirable acceleration of the vehicle.

2. A vehicle according to claim 1, wherein the connector (20) allows free motion of the body support in a fore-aft direction with respect to the ground contacting assembly.

3. A vehicle according to claim 1, wherein the connector (20) allows rotation of the body support about a horizontal axis perpendicular to a fore-aft direction.

4. A vehicle according to claim 2, wherein the connector (20) includes a pneumatic cylinder.

5. A vehicle according to claim 2, wherein the connector (20) includes a slide mechanism.

6. A vehicle according to claim 1, further comprising a rotary actuator for rotating the body support with respect to the ground contacting assembly such as to counteract the effect of a roll of the ground contacting assembly on an orientation of the body support with respect to a vertical direction.

7. A vehicle according to claim 6, wherein the rotary actuator is a motor.

8. A vehicle according to claim 1, further comprising a pilot wheel assembly coupled to the body support.

9. A vehicle according to claim 8, wherein the pilot wheel assembly includes at least one wheel.

10. A vehicle according to claim 8, wherein the pilot wheel assembly includes a self-leveling mechanism.

11. A vehicle according to claim 1, wherein the release includes a reservoir of mechanical energy coupled to at least one of the ground contacting assembly and the body support such that the mechanical energy is used to decouple motion of the center of gravity of the body support from motion of the ground contacting assembly.

12. A vehicle according to claim 11, wherein the reservoir of mechanical energy is a spring.

13. A vehicle according to claim 12, wherein the spring is a coil spring.

14. A vehicle according to claim 12, further comprising a slide mechanism for allowing travel of the body support with respect to the ground contacting assembly, wherein the spring is coupled between the ground contacting assembly and the slide mechanism in such a manner as to induce motion of the slide mechanism.

15. A vehicle according to claim 1, further comprising a damper for absorbing energy for minimizing impact of the undesired acceleration on the passenger.

16. A method for protecting a passenger of a vehicle having a ground contacting assembly and a body support in a situation wherein the vehicle undergoes undesirable acceleration, the method comprising:
a. sensing the undesired acceleration
b. automatically actuating an actuator on the basis of the sensed acceleration to actuate a release to decouple motion of the center of gravity of the body support from motion of the ground contacting assembly with respect to at least one axis.

## Patentansprüche

1. Fahrzeug einschließlich einer Sicherheitseinrichtung zum Schützen eines Fahrgasts des Fahrzeugs in einer Situation, in welcher das Fahrzeug einer unerwünschten Beschleunigung ausgesetzt ist, welches eine den Boden berührende Anordnung (18) und eine KcSrperstützeinrichtung bzw. ein Aufbaulager (12) aufweist, wobei das Aufbaulager einen. Schwerpunkt aufweist und die Sicherheitseinrichtung Folgendes aufweist:
a. ein Verbindungsglied (20), welches das Aufbaulager und die den Boden berührende Anordnung verbindet;
b. eine Auslösung, welche aktiviert werden kann, um die Bewegung des Schwerpunkts des Aufbaulagers entlang zumindest einer Achse von der Bewegung der den Boden berührenden Anordnung zu lösen; und
c. einen Stellantrieb, welcher angeordnet ist, um die Auslösung in automatischer Reaktion auf die unerwünschte Beschleunigung des Fahrzeugs auszulösen.

2. Fahrzeug nach Anspruch 1, wobei das Verbindungsglied (20) eine freie Bewegung des Aufbaulagers in Längsrichtung in Bezug auf die den Boden berührende Anordnung zulässt.

3. Fahrzeug nach Anspruch 1, wobei das Verbindungsglied (20) die Drehung des Aufbaulagers um eine horizontale Achse senkrecht zur Längsrichtung zulässt.

4. Fahrzeug nach Anspruch 2, wobei das Verbindungsglied (20) einen Druckluftzylinder beinhaltet.

5. Fahrzeug nach Anspruch 2, wobei das Verbindungsglied (20) eine Gleiteinrichtung beinhaltet.

6. Fahrzeug nach Anspruch 1, welches zudem einen Drehstellantrieb zum Drehen des Aufbaulagers in Bezug auf die den Boden berührende Anordnung aufweist, um der Wirkung einer Rolle der den Boden berührenden Anordnung auf eine Ausrichtung des Aufbaulagers in Bezug auf eine vertikale Richtung entgegenzuwirken.

7. Fahrzeug nach Anspruch 6, wobei der Drehstellantrieb ein Motor ist.

8. Fahrzeug nach Anspruch 1, welches zudem eine Pilotradanordnung aufweist, welche mit dem Aufbaulager verbunden ist.

9. Fahrzeug nach Anspruch 8, wobei die Pilotradanordnung zumindest ein Rad beinhaltet.

10. Fahrzeug nach Anspruch 8, wobei die Pilotradanordnung eine selbsnivellierende Einrichtung beinhaltet.

11. Fahrzeug nach Anspruch 1, wobei die Auslösung einen Speicher einer mechanischen Energie beinhaltet, welcher mit mindestens einem der den Boden berührenden Anordnung und dem Aufbaulager derart verbunden ist, dass die mechanische Energie verwendet wird, um die Bewegung des Schwerpunkts des Aufbaulagers von der Bewegung der den Boden berührenden Anordnung zu lösen.

12. Fahrzeug nach Anspruch 11, wobei der Speicher der mechanischen Energie eine Feder ist.

13. Fahrzeug nach Anspruch 12, wobei die Feder eine Schraubenfeder ist.

14. Fahrzeug nach Anspruch 12, welches zudem eine Gleiteinrichtung aufweist, um ein Fahren des Aufbaulagers in Bezug auf die den Boden berührende Anordnung zuzulassen, wobei die Feder zwischen der den Boden berührenden Anordnung und der Gleiteinrichtung derart verbunden ist, um eine Bewegung der Gleiteinrichtung einzuleiten.

15. Fahrzeug nach Anspruch 1, welches zudem einen Dämpfer zum Absorbieren der Energie zum Minimieren des Aufpralls der unerwünschten Beschleunigung auf den Fahrgast aufweist.

16. Verfahren zum Schützen eines Fahrgasts eines Fahrzeugs mit einer den Boden berührenden Anordnung und einem Aufbaulager in einer Situation, in welcher das Fahrzeug einer unerwünschten Beschleunigung ausgesetzt ist, wobei das Verfahren Folgendes aufweist:
a. Abtasten der unerwünschten Beschleunigung
b. automatisches Aktivieren eines Stellantriebs basierend auf der erfassten Beschleunigung, um eine Auslösung zu aktivieren, um die Bewegung des Schwerpunkts des Aufbaulagers von der Bewegung der den Boden berührenden Anordnung in Bezug auf zumindest eine Achse zu lösen.

## Revendications

1. Véhicule incluant un mécanisme de sécurité destiné à protéger un passager de ce véhicule, dans une situation dans laquelle le véhicule effectue une accélération indésirable, ayant un ensemble en contact avec le sol (18) et un support de corps (12), le support de corps ayant un centre de gravité, **caractérisé en ce que** le mécanisme de sécurité comprend :
a. Un connecteur (20) couplant le support de corps et l'ensemble en contact avec le sol,
b. Un déclencheur pouvant être actionné pour découpler le mouvement du centre de gravité du support de corps le long d'au moins un axe par rapport au mouvement de l'ensemble en contact avec le sol, et
c. Un actionneur agencé pour libérer le déclencheur en réponse automatique à l'accélération indésirable du véhicule.

2. Véhicule selon la revendication 1, dans lequel le connecteur (20) permet un mouvement libre du support de corps dans une direction longitudinale par rapport à l'ensemble en contact avec le sol.

3. Véhicule selon la revendication 1, dans lequel le connecteur (20) permet la rotation du support de corps autour d'un axe horizontal perpendiculaire à une direction longitudinale.

4. Véhicule selon la revendication 2, dans lequel le connecteur (20) inclut un cylindre pneumatique.

5. Véhicule selon la revendication 2, dans lequel le connecteur (20) inclut un mécanisme coulissant.

6. Véhicule selon la revendication 1, comprenant en outre un actionneur rotatif pour faire pivoter le support de corps par rapport à l'ensemble en contact,avec, le sol mais aussi pour contrer l'effet de roulis de l'ensemble en contact avec le sol sur une orientation du support de corps par rapport à une direction verticale.

7. Véhicule selon la revendication 6, dans lequel l'actionneur rotatif est un moteur.

8. Véhicule selon la revendication 1, comprenant en outre un dispositif de roue conductrice couplé au support de corps.

9. Véhicule selon la revendication 8, dans lequel le dispositif de roue conductrice comprend au moins une roue.

10. Véhicule selon la revendication 8, dans lequel le dispositif de roue conductrice comprend un mécanisme de mise à niveau automatique.

11. Véhicule selon la revendication 1, dans lequel le déclencheur comprend un réservoir d'énergie mécanique couplé au moins à l'ensemble en contact avec le sol ou au support de corps de telle sorte que l'énergie est utilisée pour découpler le mouvement du centre de gravité du support de corps de celui de l'ensemble en contact avec le sol.

12. Véhicule selon la revendication 11, dans lequel le réservoir d'énergie mécanique est un ressort.

13. Véhicule selon la revendication 12, dans lequel le ressort est un ressort hélicoïdal.

14. Véhicule selon la revendication 12, comprenant en outre un mécanisme coulissant permettant le déplacement du support de corps par rapport à l'ensemble en contact avec le sol, dans lequel le ressorts est positionné entre l'ensemble en contact avec le sol et le mécanisme coulissant de manière à induire le mouvement du mécanisme coulissant.

15. Véhicule selon la revendication 1, comprenant en outre un amortisseur destiné à absorber l'énergie afin de minimiser l'impact de l'accélération indésirable sur le passager.

16. Procédé destiné à protéger un passager d'un véhicule ayant un ensemble en contact avec le sol et un support de corps dans une situation dans laquelle le véhicule subit une accélération indésirable, le procédé consistant à :
a. Détecter l'accélération non souhaitée.
b. Actionner automatiquement un actionneur sur la base de l'accélération détectée pour actionner un déclencheur pour découpler le mouvement du centre de gravité du support de corps de celui de l'ensemble en contact avec le sol selon au moins un axe.
